# EUROPÄISCHE PATENTSCHRIFT

(11) **EP 3 359 828 B1**
(45) Veröffentlichungstag und Bekanntmachung des Hinweises auf die Patenterteilung: **11.09.2019**
(21) Anmeldenummer: 16774962.1
(22) Anmeldetag: 04.10.2016
(51) Int. Cl.: F16B 25/00, F16B 37/12

(54) **GEWINDEFORMENDE SCHRAUBE MIT SEPARATER GEWINDESPIRALE UND UNTERSCHIEDLICHEN TEILFLANKENWINKELN**
THREAD MOULDING SCREW WITH SEPARATE THREAD SPIRAL AND DIFFERENT FLANK PORTION ANGLES
VIS AUTOTARAUDEUSE AYANT UNE SPIRALE FILETEE SEPAREE ET DIFFERENTS PAS ANGULAIRES PARTIELS

(30) Priorität: 06.10.2015 EP 15188544
(43) Veröffentlichungstag der Anmeldung: 15.08.2018
(73) Patentinhaber: Hilti Aktiengesellschaft, 9494 Schaan (LI)
(72) Erfinder: HAKENHOLT, Christoph, 6800 Feldkirch (AT); WINKLER, Bernhard, 6800 Feldkirch (AT); SCHNEIDER, Roland, 6824 Schlins (AT); SPRING, Robert, 9467 Fruemsen (CH); NGUYEN, Huu Toan, 9453 Eichberg (CH)
(74) Vertreter: Hilti Aktiengesellschaft Corporate Intellectual Property
(86) Internationale Anmeldenummer: PCT/EP2016/073628
(87) Internationale Veröffentlichungsnummer: WO 2017/060214

(56) Entgegenhaltungen:
- DE-A1- 2 823 897
- DE-A1-102010 063 682
- US-A1- 2011 142 569

## Beschreibung

Die Erfindung betrifft eine gewindeformende, insbesondere gewindeschneidende, Schraube gemäss dem Oberbegriff des Anspruchs 1. Eine solche Schraube ist ausgestattet mit einem Schaft, der in einem vorderen Bereich des Schafts eine Spitze zum Einführen in eine Bohrung in einem Substrat, in einem rückwärtigen Bereich des Schafts einen Antrieb zum Übertragen eines Drehmoments auf den Schaft, sowie eine spiralförmige Nut aufweist, und mit einer Gewindespirale, welche in die spiralförmige Nut eingesetzt ist, wobei die spiralförmige Nut eine vordere Flanke und eine der vorderen Flanke gegenüberliegende rückwärtige Flanke aufweist.

Aus der US 20110142569 A1 geht eine Betonschraube mit zwei Gewindeabschnitten hervor. Ein erster, rückwärtiger Gewindeabschnitt ist einstückig mit dem Schaft gebildet, und ein zweiter, vorderer Gewindeabschnitt ist durch eine Gewindespirale gebildet, die in einer spiralförmigen Nut im Schaft angeordnet ist. Die beiden Gewindeabschnitte bilden dabei ein einziges zusammenhängendes Gewinde.

Die DE 102010063682 A1 zeigt eine Betonschraube mit einem Schaft mit einem Gewinde sowie mit einer Schneidfeder, die zumindest abschnittsweise in das Gewinde am Schaft eingedreht ist. Die Schneidfeder kann beispielsweise einen tropfenförmigen Querschnitt aufweisen.

Die DE 102007042977 A1, die EP 2185829 B1 und die EP 2390516 A1 offenbaren Schraubanker zum Befestigen von Anbauteilen in Beton oder Mauerwerk mit jeweils einem Schaft, der ein Aussengewinde aufweist, das von einer vom Schaft gesonderten Gewindespirale gebildet ist, wobei die Gewindespirale jeweils auf unterschiedliche Arten am Schaft befestigt ist.

Die DE 102008016866 B4 beschreibt eine Schraube umfassend ein Schaftteil aus Vollmaterial und ein an das Schaftteil anschliessendes, angefügtes, aus einem profilierten Metallband gewickeltes Gewindeteil.

Die EP 1498618 A2 schlägt eine Schraube vor, deren Schaft mit einem aufgewalzten Gewinde aus einem korrosionsbeständigen Metall besteht. Im Bereich des vorderen Endes des Schraubenschafts ist eine in der Gewindelinie liegende Ausnehmung eingefräst, in die ein Einsatz aus gehärtetem Metall eingesetzt ist. Dieser Einsatz weist an seiner Aussenseite eine mehrere Sägezähne enthaltende in der Gewindelinie liegende Schneidausbildung auf.

Weitere Befestigungselemente mit separaten Spiralanordnungen gehen aus der US 1181971 A, der DE 87 13 708 U1 und der US 20040258502 A1 hervor.

Die EP 0905389 A2 offenbart eine Betonschraube, bei der ein in Einschraubrichtung vorne liegender Schraubenabschnitt aus gehärtetem Stahl und ein in Einschraubrichtung gesehen hinten liegender Schraubenabschnitt aus korrosionsfestem Stahl besteht.

Aufgabe der Erfindung ist es, eine einfach herstellbare gewindeformende Schraube mit vom Schaft separater Gewindespirale anzugeben, die besonders vielseitig einsetzbar ist, besonders zuverlässig ist und besonders gute Lastwerte aufweist.

Die Aufgabe wird erfindungsgemäss durch eine Schraube mit den Merkmalen des Anspruchs 1 gelöst. Bevorzugte Ausführungsformen sind in den abhängigen Ansprüchen angegeben.

Eine erfindungsgemässe Schraube ist dadurch gekennzeichnet, dass die vordere Flanke der spiralförmigen Nut zumindest bereichsweise einen anderen Teilflankenwinkel aufweist als die rückwärtige Flanke der spiralförmigen Nut.

Ein Grundgedanke der Erfindung kann darin gesehen werden, die zur Aufnahme der vom Schaft separaten Gewindespirale vorgesehene spiralförmige Nut im Schnitt asymmetrisch auszuführen. Insbesondere sind die beiden gegenüberliegenden Flanken der spiralförmigen Nut unter verschiedenen Teilflankenwinkeln angeordnet. Unter dem Teilflankenwinkel kann dabei in fachüblicher Weise der Winkel zwischen der jeweiligen Flanke und der Senkrechten zur Gewindeachse im Achsschnitt verstanden werden. Die Erfindung hat erkannt, dass bei einer gattungsgemässen Schraube mit separater Gewindespirale die Flanken der spiralförmigen Nut beziehungsweise der Gewindespirale ein Keilgetriebe bilden könne, welches eine axiale Last im Schaft in eine radiale Kraft- und Bewegungskomponente in der Gewindespirale umwandeln kann. Indem erfindungsgemäss die entsprechenden Teilflankenwinkel gezielt variiert werden, können an der Schraube mit geringem Aufwand zusätzliche Funktionen wie z. B. die Erdbebentauglichkeit durch Nachspreizen, zur Verfügung gestellt werden.

Die Schraube ist eine gewindeformende Schraube, das heisst sie und insbesondere ihre Gewindespirale sind so ausgelegt, dass sie sich ihr Gegengewinde beim Eindrehen in ein zylindrisches Loch im Substrat selbst erzeugen können. Bei dem Substrat kann es sich insbesondere um einen mineralischen Baustoff, vorzugsweise um Beton, handeln, das heisst die Schraube kann vorzugsweise eine Betonschraube sein. Soweit hier von der Längsrichtung, Radialrichtung und/oder Umfangsrichtung die Rede ist, so kann sich dies insbesondere auf die Längsachse des Schafts und/oder der Schraube beziehen. Die Richtungsattribute "vorder" und "rückwärtig" können hier insbesondere einheitlich verwendet werden, so dass beispielsweise der vordere Bereich des Schafts dem rückwärtigen Bereich des Schafts in derselben Richtung vorgelagert ist wie die vordere Flanke der spiralförmigen Nut der rückwärtigen Flanke der spiralförmigen Nut. Die Richtungsattribute "vorder" und "rückwärtig" können sich insbesondere auf die Längsachse der Schraube, das heisst auf die Einschraubrichtung, beziehen. Zwischen den beiden Flanken der spiralförmigen Nut kann sich auch noch ein, beispielsweise ebener, konvexer oder konkaver, Gewindegrund befinden.

Der Schaft besteht zweckmässigerweise aus einem Metallmaterial. Zusätzlich oder alternativ kann auch die Gewindespirale aus einem Metallmaterial bestehen. Insbesondere können die Gewindespirale und der Schaft aus unterschiedlichen Materialien bestehen, was zum Beispiel im Hinblick auf die Tragfähigkeit und/oder Korrosionsbeständigkeit vorteilhaft sein kann.

Der Antrieb kann beispielsweise einen Aussenmehrkant oder einen Innenmehrkant aufweisen und insbesondere als Schraubenkopf ausgeführt sein. Da die Spitze einer Betonschraube regelmässig kein Material verdrängen muss, kann die Spitze vorzugsweise durch eine zumindest annähernd ebene Stirnfläche gebildet werden. Der Schaft kann an der Spitze aber beispielsweise auch spitz auslaufen.

Zweckmässigerweise unterscheidet sich der Teilflankenwinkel der vorderen Flanke der spiralförmigen Nut um mindestens 2° oder 5°, vorzugsweise um mindestens 10°, vom Teilflankenwinkel der rückwärtigen Flanke der spiralförmigen Nut. Hierdurch kann ein besonders grosses Anwendungsspektrum eröffnet werden.

Eine besonders bevorzugte Ausgestaltung der Erfindung liegt darin, dass die vordere Flanke der spiralförmigen Nut zumindest bereichsweise einen grösseren Teilflankenwinkel aufweist als die rückwärtige Flanke der spiralförmigen Nut. Dies ist insbesondere bei Schrauben vorteilhaft, die für Erdbebensituationen vorgesehen sind. Denn im Erbebenfall kann sich das Loch, in welchem die Schraube angeordnet ist, unter Umständen aufweiten, was darauf zurückzuführen ist, dass sich ein durch das Loch verlaufender Riss im Substrat öffnet. In diesem Fall kann in der bevorzugten Ausgestaltung der Erfindung die Gewindespirale an der vergleichsweise flachen vorderen Flanke abgleiten und unter radialer Expansion radial nach aussen wandern. Der Formschluss zwischen Gewindespirale und Substrat bleibt somit trotz Rissöffnung erhalten, so dass eine besonders hohe Resttragkraft erhalten wird, insbesondere weil der Verlust an Tragkraft durch die entsprechend reduzierte tragende Fläche am Schaft aufgrund der vergleichsweise hohen Metalldruckfestigkeiten in der Regel vernachlässigbar sein wird. Zugleich sorgt die relativ steile Anordnung der rückwärtigen Flanke dafür, dass beim Setzen der Schraube im Schaft auftretende Drucklasten keine vorzeitige radiale Aufweitung der Gewindespirale bewirken, was die Zuverlässigkeit und die Lastwerte noch weiter verbessert.

Die Gewindespirale kann zwei äussere Flanken aufweise, zwischen denen eine Gewindespitze gebildet ist. Diese Gewindespitze dringt beim Setzen in das Substrat ein und bildet den Hinterschnitt. Vorzugsweise können die beiden äusseren Flanken unterschiedliche Teilflankenwinkel aufweisen, wodurch die Funktionalität, insbesondere das Setzverhalten, noch weiter verbessert werden kann.

Weiterhin ist es zweckmässig, dass die Gewindespirale entlang der spiralförmigen Nut beweglich in die spiralförmige Nut eingesetzt ist. Hierdurch kann eine besonders wirkungsvolle radiale Expansion der Gewindespirale bewirkt werden. Beispielsweise kann die Gewindespirale an der Spitze des Schafts axial am Schaft festgelegt sein. Hierfür kann z. B. eine radial verlaufende Haltenut an der Spitze des Schafts vorgesehen sein, in welche ein korrespondierendes Ende der Gewindespirale eingelegt ist. Insbesondere kann sich die Haltenut quer über den gesamten Querschnitt des Schafts erstrecken.

Erfindungsgemäss können für die spiralförmige Nut und somit für die Gewindespirale je nach Einsatzgebiet unterschiedliche Gewindesteigungen vorgesehen sein.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine perspektivische Darstellung des Schafts einer erfindungsgemässen Schraube ohne Gewindespirale;
- Figur 2:: eine perspektivische Darstellung entsprechend Figur 1 der Schraube aus Figur 1 mit teilmontierter Gewindespirale;
- Figur 3:: eine perspektivische Darstellung entsprechend Figur 1 der Schraube aus Figur 1 mit Gewindespirale im betriebsfertigen Zustand;
- Figur 4:: eine Detailansicht der Schraube aus Figur 3 im Achsschnitt im Bereich des in Figur 3 gezeigten Rechtecks, wobei zusätzlich die Spitze und der Antrieb der Schraube zur Verdeutlichung der Richtungen grob schematisch dargestellt sind; und
- Figur 5:: eine Detailansicht entsprechend Figur 4 der Schraube aus Figur 3, wobei die Schraube in ein Loch in einem Substrat eingedreht ist; und
- Figur 6:: eine Detailansicht entsprechend Figur 5, wobei jedoch die Lochwand, beispielsweise aufgrund von Rissöffnung im Erdbebenfall, ein Stück weiter vom Schaft der Schraube entfernt ist als im Falle der Figur 5.

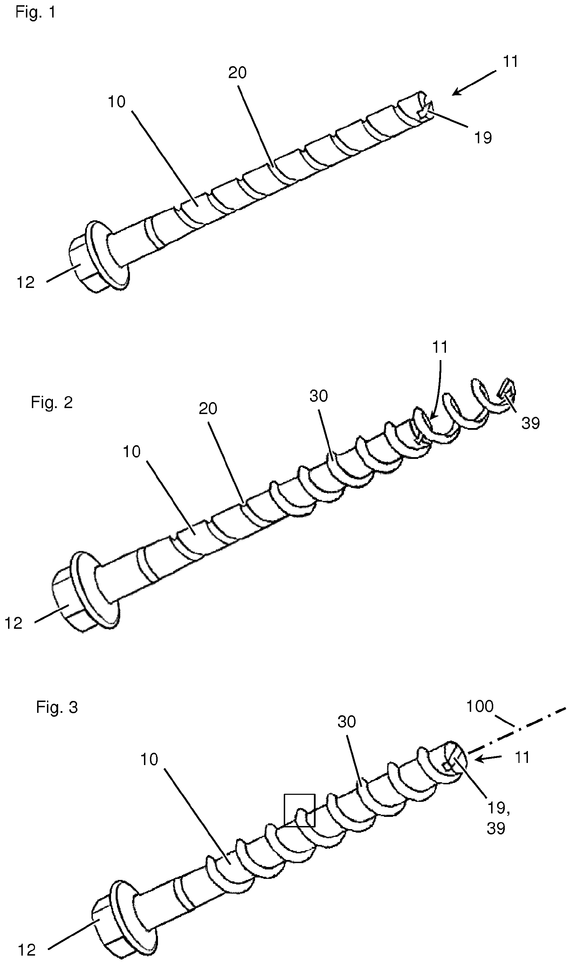

Ein Ausführungsbeispiel einer erfindungsgemässen Schraube ist in den Figuren dargestellt. Wie insbesondere die Figuren 1 bis 3 zeigen, weist die Schraube einen etwa zylindrischen Schaft 10 auf, an dessen vorderen Ende eine Spitze 11 zum Einführen in ein Bohrung vorgesehen ist, und an dessen dem vorderen Ende gegenüberliegenden rückwärtigen Endbereich ein Antrieb 12 vorgesehen ist, mit dem ein Drehmoment auf den Schaft 10 übertragen werden kann. Der Antrieb 12 kann beispielsweise eine Innenmehrkantstruktur oder eine Aussenmehrkantstruktur aufweisen. Im vorliegenden Ausführungsbeispiel ist der Antrieb 12 als endseitiger Schraubenkopf mit einer Aussensechskantstruktur ausgeführt. In der Mantelfläche des Schafts 10 ist eine spiralförmige Nut 20 vorgesehen, welche von der Spitze 11 des Schafts 10 ausgeht.

Die Schraube weist darüber hinaus eine Gewindespirale 30 auf. Diese Gewindespirale 30 hat dieselbe Steigung wie die spiralförmige Nut 20 und ist im fertig montierten Zustand der Schraube (vgl. Figur 3) in der spiralförmigen Nut 20 angeordnet. Die Gewindespirale 30 bildet ein Schneidgewinde, welches sich beim Eindrehen der Schraube in das Substrat ein Gegengewinde schneidet.

Wie insbesondere Figur 1 zeigt, ist an der Spitze 11 des Schafts 10 eine stirnseitige Haltenut 19 vorgesehen. Wie insbesondere Figur 2 zeigt, weist die Gewindespirale 30 an ihrem vorderen Ende einen abgewinkelten Haltesteg 39 auf, an dem die Gewindespirale 30 von einer reinen Helixform abweicht. Wie insbesondere Figur 3 zeigt, ist der Haltesteg 39 bei der fertig montierten Schraube in die Haltenut 19 eingelegt. Hierdurch wird die Gewindespirale 30 an ihrem vorderen Ende axial, bezogen auf die Längsachse 100 des Schafts 10, am Schaft 10 festgelegt. Ansonsten ist die Gewindespirale 30 entlang der spiralförmigen Nut 20 verschiebbar in der spiralförmige Nut 20 angeordnet, das heisst die Gewindespirale 30 kann in der spiralförmige Nut 20 helixartig vor- und zurückwandern.

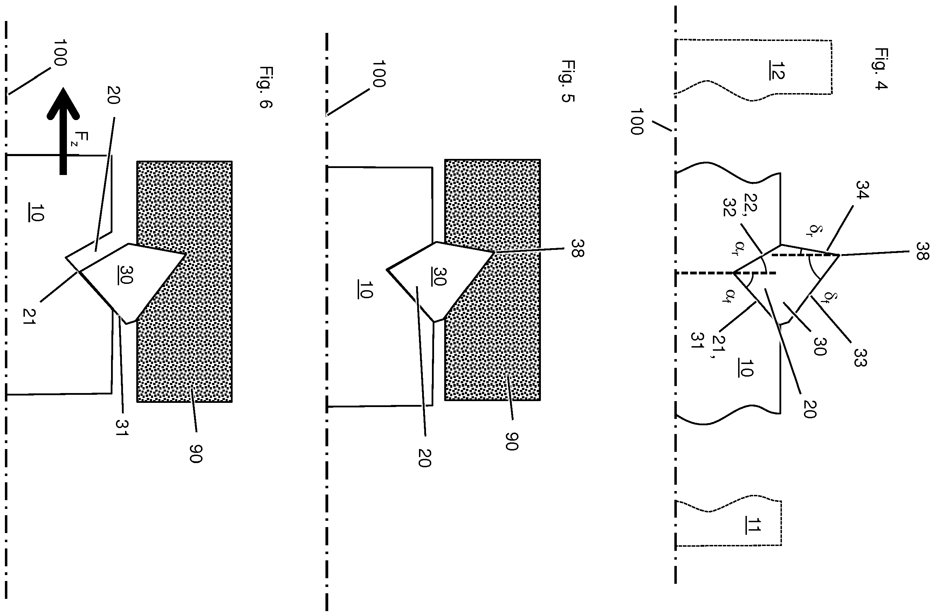

Wie insbesondere Figur 4 zeigt, weist die spiralförmige Nut 20 zwei Flanken auf, nämlich eine im Längsschnitt der Schraube vordere, dem Antrieb 12 zugewandte, spitzennähere Flanke 21 und eine im Längsschnitt der Schraube hintere, der Spitze 11 zugewandte, antriebsnähere Flanke 22, welche der vorderen Flanke 21 gegenüberliegt. Die vordere Flanke 21 weist den Teilflankenwinkel α_{f} und die rückwärtige Flanke 22 den Teilflankenwinkel αᵣ auf. Entsprechend der Erfindung sind die beiden Teilflankenwinkel voneinander verschieden, das heisst α_{f} ≠ αᵣ. Insbesondere ist der Teilflankenwinkel α_{f} der vorderen Flanke 21 grösser als der Teilflankenwinkel αᵣ der rückwärtigen Flanke 22, α_{f} > αᵣ. Vorzugsweise unterscheiden sich die beiden Teilflankenwinkel um mindestens 2°, um mindestens 5° oder um mindestens 10°, insbesondere ist α_{f} > αᵣ + 2°, α_{f} > αᵣ + 5° oder α_{f} > αᵣ + 10°. In fachüblicher Weise kann unter dem jeweiligen Teilflankenwinkel insbesondere der Winkel zwischen der jeweiligen Flanke und einer Senkrechten zur Längsachse 100 verstanden werden.

Zwischen den beiden Flanken 21 und 22 des Schafts 10 kann sich auch noch ein im Längsschnitt beispielsweise ebener, konvexer oder konkaver Gewindegrund befinden, der in den Zeichnungen jedoch nicht dargestellt ist.

Die Gewindespirale 30 weist zwei der spiralförmigen Nut 20 zugewandte und/oder der Längsachse 100 des Schafts 10 zugewandte, das heisst innere Flanken 31 und 32 auf, nämlich eine im Längsschnitt der Schraube vordere, spitzennähere Flanke 31 und eine im Längsschnitt der Schraube hintere, antriebsnähere Flanke 32. Die vordere Flanke 31 der Gewindespirale 30 ist dabei der vorderen Flanke 21 der spiralförmigen Nut 20 benachbart und weist insbesondere zumindest annähernd denselben Teilflankenwinkel wie die vordere Flanke 21 der spiralförmigen Nut 20 auf. Die rückwärtige Flanke 32 der Gewindespirale 30 ist der rückwärtigen Flanke 22 der spiralförmigen Nut 20 benachbart und weist insbesondere zumindest annähernd denselben Teilflankenwinkel wie die rückwärtige Flanke 22 der spiralförmigen Nut 20 auf.

Die Gewindespirale 30 weist ferner zwei der spiralförmigen Nut 20 abgewandte und/oder der Längsachse 100 des Schafts 10 abgewandte, das heisst äussere Flanken 33 und 34 auf, nämlich eine im Längsschnitt der Schraube vordere, spitzennähere Flanke 33 und eine im Längsschnitt der Schraube hintere, antriebsnähere Flanke 34. Zwischen diesen beiden Flanken 33 und 34 ist die Gewindespitze 38 des Schneidgewindes der Schraube gebildet. Die vordere Flanke 33 der Gewindespirale 30 weist den Teilflankenwinkel δ_{f} und die rückwärtige Flanke 34 den Teilflankenwinkel δᵣ auf. Im dargestellten Ausführungsbeispiel sind diese beiden Teilflankenwinkel voneinander verschieden, das heisst δ_{f} ≠ δᵣ. Insbesondere ist der Teilflankenwinkel δ_{f} der vorderen Flanke 33 grösser als der Teilflankenwinkel δₜ der rückwärtigen Flanke 34, δ_{f} > δᵣ, vorzugsweise um zumindest 5° oder 10°, δ_{f} > δᵣ + 5° oder δ_{f} > δᵣ + 10°.

Figur 5 zeigt ein Detail der Schraube, nachdem sie in ein Loch in einem Substrat 90 eingedreht wurde. Die Schraube ist eine gewindeformende Schraube, das heisst sie und insbesondere ihre Gewindespirale 30 sind so ausgelegt, dass sie sich ihr Gegengewinde beim Eindrehen in ein zylindrisches Loch im Substrat 90 selbst erzeugen können. Bei dem Substrat 90 kann es sich insbesondere um einen mineralischen Baustoff, vorzugsweise um Beton handeln, das heisst die Schraube kann vorzugsweise eine Betonschraube sein.

Figur 6 zeigt eine Ansicht entsprechend Figur 5, wobei gemäss Figur 6 jedoch die Lochwand ein Stück weiter vom Schaft der Schraube entfernt ist als in Figur 5 gezeigt. Die Situation der Figur 6 kann sich beispielsweise im Erdbebenfall ergeben, wenn sich ein durch das Loch im Substrat verlaufender Riss öffnet und somit der Lochdurchmesser sektional zunimmt. Da auf den Schaft 10 der Schraube die in Figur 6 mit einem Pfeil dargestellte Zugkraft F_{z} wirkt, gleitet die vordere Flanke 31 der Gewindespirale 30 bei Rissöffnung an der vorderen Flanke 21 der spiralförmige Nut 20 ab. Dabei wandert die Gewindespirale 30, und zwar vorzugsweise reversibel, relativ zur Längsachse 100 radial nach aussen und bleibt im formschlüssigen Eingriff mit dem Substrat 90, so dass die Tragfähigkeit weitestgehend erhalten bleiben kann. Dadurch, dass der Teilflankenwinkel α_{f} der vorderen Flanke 21 der spiralförmige Nut 20 grösser gewählt wird als der Teilflankenwinkel δᵣ der rückwärtigen äusseren Flanke 34 der Gewindespirale 30, α_{f} > δᵣ, kann die Relativverschiebung gezielt von der Kontaktfläche Substrat 90-Gewindespirale 30 auf die Kontaktfläche Gewindespirale 30-Schaft 10 verlagert werden.

## Patentansprüche

1. Gewindeformende Schraube
mit einem Schaft (10), der in einem vorderen Bereich des Schafts (10) eine Spitze (11) zum Einführen in eine Bohrung in einem Substrat (90), in einem rückwärtigen Bereich des Schafts (10) einen Antrieb (12) zum Übertragen eines Drehmoments auf den Schaft (10), sowie eine spiralförmige Nut (20) aufweist, und
mit einer Gewindespirale (30), welche in die spiralförmige Nut (20) eingesetzt ist, wobei die spiralförmige Nut (20) eine vordere Flanke (21) und eine der vorderen Flanke (21) gegenüberliegende rückwärtige Flanke (22) aufweist,
**dadurch gekennzeichnet,**
**dass** die vordere Flanke (21) der spiralförmigen Nut (20) zumindest bereichsweise einen anderen Teilflankenwinkel (α) aufweist als die rückwärtige Flanke (22) der spiralförmigen Nut (20).

2. Schraube nach Anspruch 1,
**dadurch gekennzeichnet,**
**dass** sich der Teilflankenwinkel (α_{f}) der vorderen Flanke (21) der spiralförmigen Nut (20) um mindestens 5°, vorzugsweise um mindestens 10°, vom Teilflankenwinkel (αᵣ) der rückwärtigen Flanke (22) der spiralförmigen Nut (20) unterscheidet.

3. Schraube nach einem der vorstehenden Ansprüche,
**dadurch gekennzeichnet,**
**dass** die vordere Flanke (21) der spiralförmigen Nut (20) zumindest bereichsweise einen grösseren Teilflankenwinkel (α) aufweist als die rückwärtige Flanke (22) der spiralförmigen Nut (20).

4. Schraube nach einem der vorstehenden Ansprüche,
**dadurch gekennzeichnet,**
**dass** die Gewindespirale (30) zwei äussere Flanken (33, 34) aufweist, zwischen denen eine Gewindespitze (38) gebildet ist, wobei die beiden äusseren Flanken (33, 34) unterschiedliche Teilflankenwinkel aufweisen.

5. Schraube nach einem der vorstehenden Ansprüche,
**dadurch gekennzeichnet,**
**dass** die Gewindespirale (30) entlang der spiralförmigen Nut (20) beweglich in die spiralförmige Nut (20) eingesetzt ist.

6. Schraube nach einem der vorstehenden Ansprüche,
**dadurch gekennzeichnet,**
**dass** die Gewindespirale (30) an der Spitze (11) des Schafts (10) axial am Schaft (10) festgelegt ist.

## Claims

1. Screw forming a thread
with a shaft (10), which in a front area of the shaft (10) has a tip (11) for inserting into a hole in a substrate (90), in a rear area of the shaft (10) has a drive (12) for transferring a torque to the shaft (10) as well as a spiral-shaped groove (20), and with a thread spiral (30), which is inserted into the spiral-shaped groove (20),
in which the spiral-shaped groove (20) has a front flank (21) and a rear flank (22) lying opposite the front flank (21),
**characterised in that**
the front flank (21) of the spiral-shaped groove (20) has a different part flank angle (α) from the rear flank (22) of the spiral-shaped groove (20) at least in certain areas.

2. Screw according to claim 1,
**characterised in**
**that**
the part flank angle (α_{f}) of the front flank (21) of the spiral-shaped groove (20) differs from the part flank angle (αᵣ) of the rear flank (22) of the spiral-shaped groove (20) by at least 5°, preferably by at least 10°.

3. Screw according to one of the previous
claims, **characterised in that**
the front flank (21) of the spiral-shaped groove (20) has a larger part flank angle (α) than the rear flank (22) of the spiral-shaped groove (20) at least in certain areas.

4. Screw according to one of the previous
claims, **characterised in that**
the thread spiral (30) has two external flanks (33, 34), between which a thread tip (38) is formed, in which both external flanks (33, 34) have different part flank angles.

5. Screw according to one of the previous
claims, c**h aracterised in that**
the thread spiral (30) is inserted into the spiral-shaped groove (20) so that it may move along the spiral-shaped groove (20).

6. Screw according to one of the previous
claims, c**h aracterised in that**
the thread spiral (30) is fixed axially on the shaft (10) at the tip (11) of the shaft.

## Revendications

1. Vis autotaraudeuse comportant :
une tige (10) comportant une pointe (11) dans une zone avant de la tige (10) pour l'insertion dans un alésage dans un substrat (90) et un organe d'entraînement (12) dans une zone arrière de la tige (10) pour transmettre un couple à la tige (10), ainsi qu'une rainure en spirale (20), et
une spirale de filetage (30) insérée dans la rainure en spirale (20),
dans laquelle la rainure en spirale (20) comporte un flanc avant (21) et un flanc arrière (22) opposé au flanc avant (21),
**caractérisée en ce que**
le flanc avant (21) de la rainure en spirale (20) a, au moins dans certaines zones, un angle de flanc partiel (α) différent du flanc arrière (22) de la rainure en spirale (20).

2. Vis selon la revendication 1,
**caractérisée en ce que**
l'angle de flanc partiel (α_{f}) du flanc avant (21) de la rainure en spirale (20) est différent d'au moins 5°, de préférence d'au moins 10°, de l'angle de flanc partiel (αᵣ) du flanc arrière (22) de la rainure en spirale (20).

3. Vis selon l'une des revendications précédentes,
**caractérisée en ce que**
le flanc avant (21) de la rainure en spirale (20) a, au moins dans certaines zones, un angle de flanc partiel (α) supérieur au flanc arrière (22) de la rainure en spirale (20).

4. Vis selon l'une des revendications précédentes,
**caractérisée en ce que**
la spirale de filetage (30) comporte deux flans extérieurs (33, 34) entre lesquels est formée une pointe de filetage (38), dans laquelle les deux flans extérieurs (33, 34) ont des angles de flanc partiels différents.

5. Vis selon l'une des revendications précédentes,
**caractérisée en ce que**
la spirale de filetage (30) est insérée le long de la rainure en spirale (20) de manière mobile dans la rainure en spirale (20).

6. Vis selon l'une des revendications précédentes,
**caractérisée en ce que**
la spirale de filetage (30) est fixée axialement sur la tige (10) au niveau de la pointe (11) de la tige (10).
